# EUROPEAN PATENT APPLICATION

(11) **EP 2 241 406 A2**
(43) Date of publication of application: **20.10.2010**
(21) Application number: 09163803.1
(22) Date of filing: 25.06.2009
(51) Int. Cl.: B25B 27/02, B25B 27/06

(54) **Portable hydraulic puller**

(30) Priority: 17.04.2009 TW 98112764
(71) Applicant: Chen, Yu-Chen, Province of China (TW)
(72) Inventor: Chen, Yu-Chen, Province of China (TW)
(74) Representative: 2K Patentanwälte Blasberg Kewitz & Reichel

(57) **Abstract**

A portable hydraulic puller includes a plurality of jaws (30) having connecting ends connected to a common jaw base (10); a spring (40) assembled to the jaw base for applying a spreading spring force to the connecting ends of the jaws so as to normally spread the jaws apart; a control unit (50) assembled to the jaw base for applying a contracting force to the connecting ends of the jaws so as to contract the spring and retract the jaws inward.

## Description

### BACKGROUND OF THE INVENTION

### 1. Technical Field

The present invention relates to a portable hydraulic puller according to the preamble of Claim 1. Accordingly, the present invention severally relates to hydraulic pullers and more particularly, to a portable hydraulic puller used to remove bearings, gears, pulleys or any wheel-shaped member from axles.

### 2. Description of Related Art

A known hydraulic puller, taking the disclosure of US Patent No. 5,233,740 for example, primarily comprises a pawl assembly mounted on a casing of a hydraulic power device, and three pawls movably connected to a periphery of the pawl assembly through pivots and links, wherein each said pawl has a free end thereof formed with a hooked portion. A hand lever is attached to an upper end of the casing and a hydraulic pipe is attached to a lower end of the casing. In operation, the hooked portion of the pawls hook a rim of a wheel-shaped member, such as a bearing, a gear or a pulley, and repeatedly rotating the hand lever back and forth causes a movable rod in the hydraulic pipe to press against an axle from which the wheel-shaped member is to be detached, so that the pawls of the pawl assembly pull and remove the wheel-shaped member from the axle.

However, the aforementioned hydraulic puller has its defects. Firstly, the pivots and links limit the spread of the pawls. Moreover, spread and retraction of the pawls require manual operation where a user has to move the pawls one by one. At last, the traditional hydraulic puller is difficult to hold and operate because it provides no dedicated structure for a user to grasp it.

### SUMMARY OF THE INVENTION

The present invention has been accomplished under the circumstances in view to provide a portable hydraulic puller as described in the claims, which is convenient to operate and easy to hold.

The hydraulic puller comprises a jaw base, a plurality of jaws pivotally connected to the jaw base, a spring assembled to the jaw base for applying a spreading spring force to connecting ends of the jaws; and a control unit assembled to the jaw base for applying a contracting force to the connecting ends of the jaws, wherein the contracting force that is counter to the spreading spring force.

### BRIEF DESCRIPTION OF THE DRAWINGS

**Figure 1** is an exploded view of a portable hydraulic puller according to a first embodiment of the present invention.
**Figure 2** is an assembled perspective view of the portable hydraulic of **Figure 1****.**
**Figure 3** is a partially enlarged sectional drawing showing a jaw base, a central sleeve, a threaded segment of a hydraulic power device, connecting ends of the jaws, a spring and a control unit of the portable hydraulic puller of **Figure 1****.**
**Figure 4** is a partially sectional drawing showing the portable hydraulic puller of **Figure 1** having its jaws spread apart to the most.
**Figure 5** is a partially sectional drawing showing the portable hydraulic puller of **Figure 1** having its jaws retracted inward to the most.
**Figure 6** is a partially sectional drawing showing a portable hydraulic puller according to a second embodiment of the present invention having its jaws spread apart to the most.
**Figure 7** is a partially sectional drawing showing the portable hydraulic puller of **Figure 6** having its jaws retracted inward to the most.

### DETAILED DESCRIPTION OF THE PREFERRED EMBODIMENT

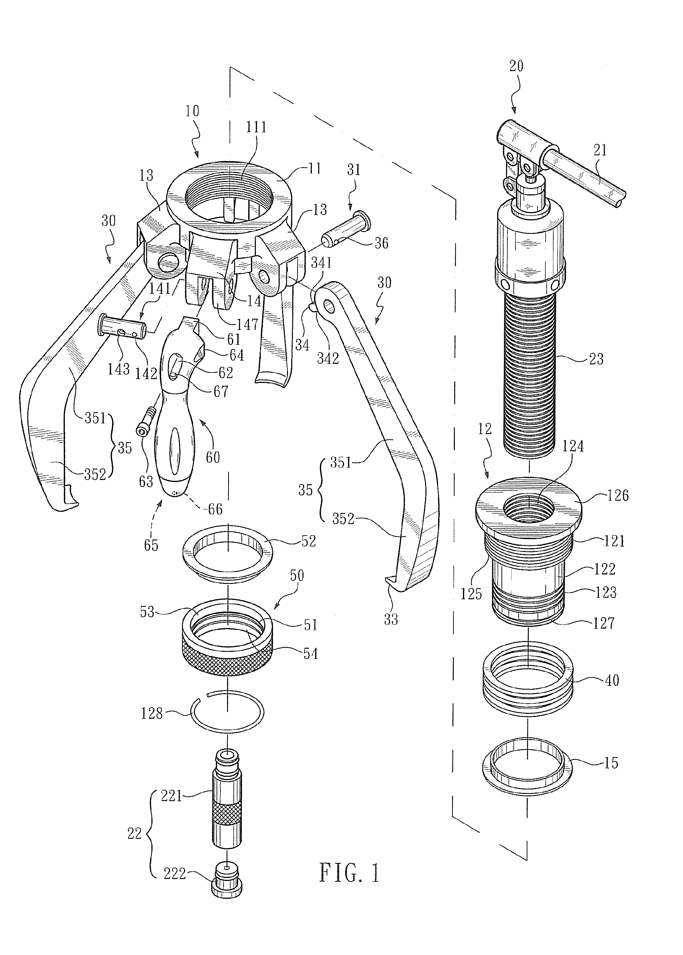

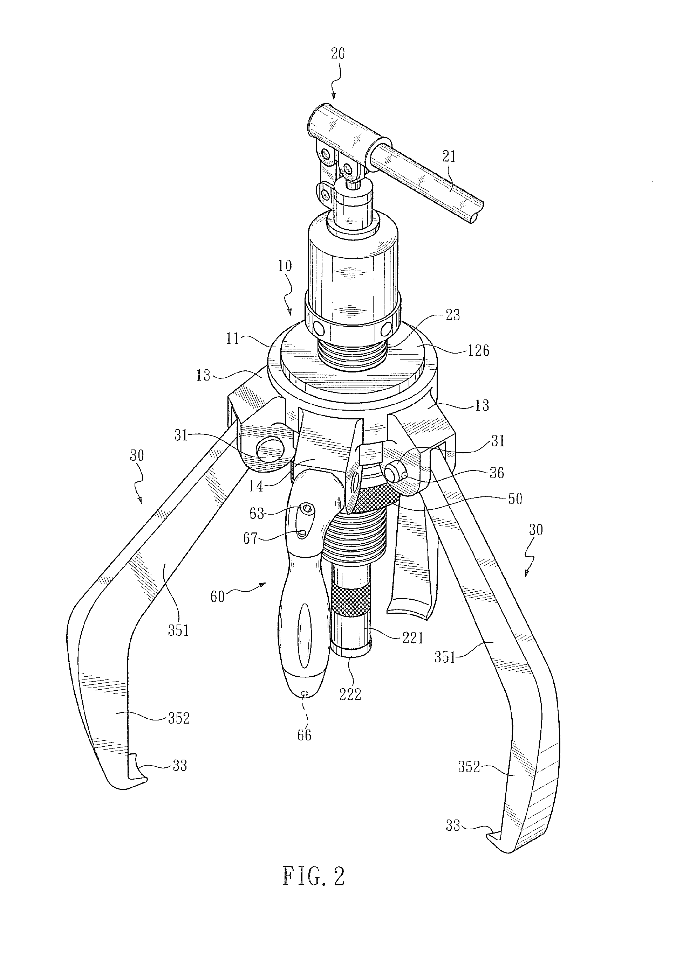

Referring to **Figures 1****,** **2** and **3****,** a portable hydraulic puller proposed in the present invention comprises a jaw base **10,** a hydraulic power device **20** set at a center of the jaw base **10,** a plurality of jaws **30** connected to a periphery of the jaw base **10** through pivots **31,** a spring **40** assembled to the jaw base **10** for applying a spreading spring force to connecting ends **32** of the jaws **30;** a control unit **50** assembled to the jaw base **10** for applying a contracting force to the connecting ends **32** of the jaws **30,** and a handle **60** attached to the jaw base **10.**

The jaw base **10** includes a circular body **11** and a central sleeve **12** coaxially assembled in the jaw base **10.** The central sleeve **12** is a tubular member having a predetermined length. A horizontally extended positioning portion **126,** a first treaded segment **121,** a smooth segment **122,** a second treaded segment **123** and a groove **127** are successively formed at an outer periphery of the central sleeve **12** while a treaded segment **124** is formed at an inner periphery of the central sleeve **12.** A circular retaining portion **125** is provided between the smooth segment **122** and the first treaded segment **121.** The first treaded segment **121** is coupled with an inner threaded surface **111** of the circular body **11.** The positioning portion **126** abuts against the jaw base **10** so as to position the central sleeve **12** while the smooth segment **122** and the second treaded segment **123** jut out of the circular body **11.** A plurality of jaw joints **13** and a handle joint **14** are provided at an outer periphery of the circular body **11.**

The hydraulic power device **20** has externally a threaded segment **23** for being coupled with the treaded segment **124** of the central sleeve **12.** A hand lever **21** is attached to an upper end of the hydraulic power device **20** for controlling the hydraulic power device **20** so as to make a pushing rod **22** axially connected to the hydraulic power device **20** move outside the hydraulic power device **20.** In the present embodiment, the pushing rod **22** is composed of an extending member **221** and a pushing member **222.** The pushing member **222** may be directly assembled to the hydraulic power device **20.** Alternatively, the pushing member **222** may be assembled to the hydraulic power device **20** with the extending member **221** therebetween. In other words, the extending member **221** is optionally implemented to increase the pushing rod **22** in length.

Each of the jaws **30** has one end defined as the connecting end 32 and an opposite end formed with a hooked portion **33** while a shank **35** is connected between the connecting end **32** and the hooked portion **33.** The shank **35** includes a first segment **351** and a second segment **352** that are integrally formed with a predetermined angle therebetween, wherein the second segment **352** is greater than the first segment **351** in both thickness and width. The connecting end **32** is coupled with the jaw joint **13** of the jaw base **10** by the pivot **31** so that the jaw **30** is allowed to swing on the pivot **31.** A ball **36** is such inlaid in the pivot **31** and propped by a spring (not shown) in the pivot **31** that the ball **36** moves radially inward and outward the pivot **31.** When the pivot **31** pierces through the jaw joint **13,** the ball **36** abuts against an inner periphery of the jaw joint **13** so as to prevent the pivot **31** from coming off the jaw joint **13.** The connecting end **32** has a protrudent pushing block **34** corresponding to the smooth segment **122** of the central sleeve **12.** The pushing block **34** comprises a first surface **341** and a second surface **342.**

The spring **40** is mounted around the smooth segment **122** of the central sleeve **12** so that a first end thereof abuts against the retaining portion **125** and a second end thereof abuts against the first surfaces **341** of the pushing blocks **34** of the jaws **30** through a first gasket **15.** The spring **40** normally applies its spring force to the first surfaces **341** so that the jaws **30** synchronously tilt outward on their respective pivots **31.** The first gasket **15** serves to evenly distribute the spring force of the spring **40** to the first surfaces **341** of the pushing blocks **34** so that the jaws are allowed to move synchronously under the evenly distributed spring force.

The control unit **50** is a ring-shaped member with threads **51** formed on its inner periphery for being coupled with the second treaded segment **123** of the central sleeve **12** so that the central sleeve **12** shifts along the second treaded segment **123** under control of the control unit **50.** A second gasket **52** is settled between the control unit **50** and the second surfaces **342** of the pushing blocks **34** on the jaws **30.** When the control unit **50** moves toward the spring **40,** the second gasket **52** gives a pushing force to the pushing blocks **34** that is counter to and conquers the spring force, so that the jaws **30** synchronously tilt inward on the pivots **31** and have the hooked portions **33** thereof hook a rim of a wheel-shaped member, such as a bearing, a gear or a pulley. A C-ring **128** is settled in the groove **127** of the central sleeve **12** so as to define a limit for the control unit **50** moving away from the spring **40.** The threads **51** are located at a middle segment of the inner periphery of the control unit **50.** Said inner periphery receives the second gasket **52** with a first groove **53** at is upper end and contacts the C-ring **128** with bottom **541** of a second groove **54** at its lower end.

The handle **60** is assembled to the handle joint **14** of the jaw base **10.** A pivot **141** transversely passing through the handle joint **14** has a ball **142** that such inlaid in the pivot **141** and propped by a spring (not shown) in the pivot **141** that the ball **142** moves radially inward and outward the pivot **141.** When the pivot **141** and the handle joint **14** are assembled, the ball **142** abuts against and inner periphery of the handle joint **14** so as to prevent the pivot **141** from coming off the handle joint **14.** The pivot **141** has a threaded hole **143** diametrically passing therethrough. The handle **60** includes a combining portion **61** for being inserted into the handle joint **14.** A through hole **62** passing through a proximal end of the handle **60** and the combining portion **61** is aligned with the threaded hole **143.** Thereby, a screw **63** pierces through the through hole **62** can get coupled with the threaded hole **143** of the pivot **141** so as to connect the handle **60** and the handle joint **14.** The handle joint **14** and the handle **60** further have at least a pair of retaining surfaces **147, 64** so that when the retaining surfaces **147, 64** contact mutually, the handle **60** is retained from driving the pivot **141** to rotate. The handle **60** allows a user to hold which with one hand for positioning the hydraulic puller and to operate the control unit **50** or the hand lever **21** of the hydraulic power device **20** with the other hand, thus achieving easy and effort-saving operation.

A lighting device **65** is assembled to the handle **60** so that an LED bulb **66** of the lighting device **65** is exposed at a distal end of the handle **60** while a switch **67** of the lighting device **65** is provided on the handle **60** for easy switching. The lighting device **65** serves to provide illumination in operation of the hydraulic puller.

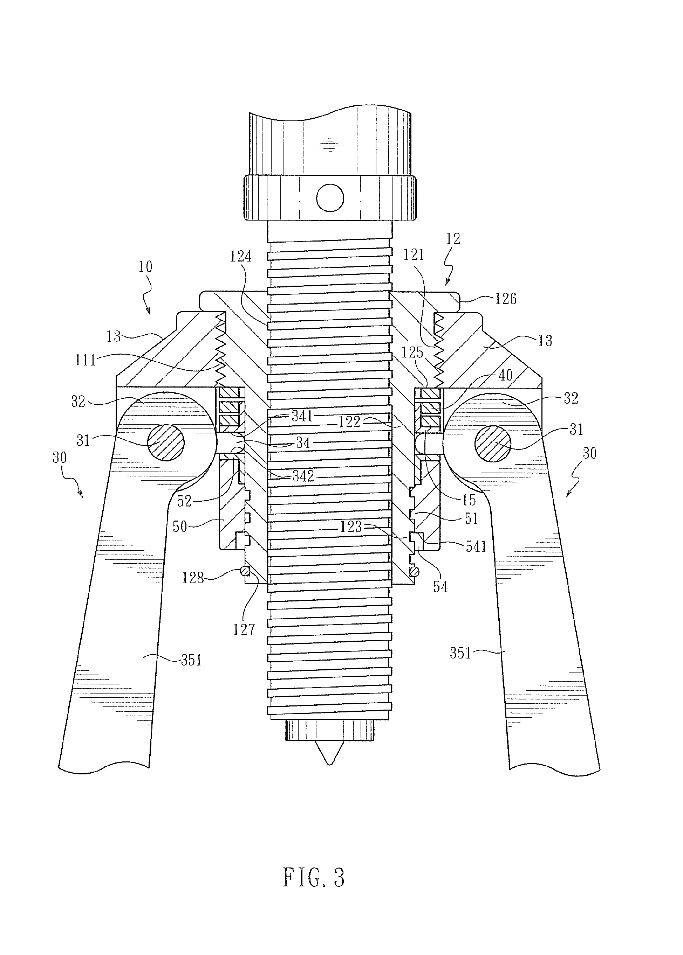

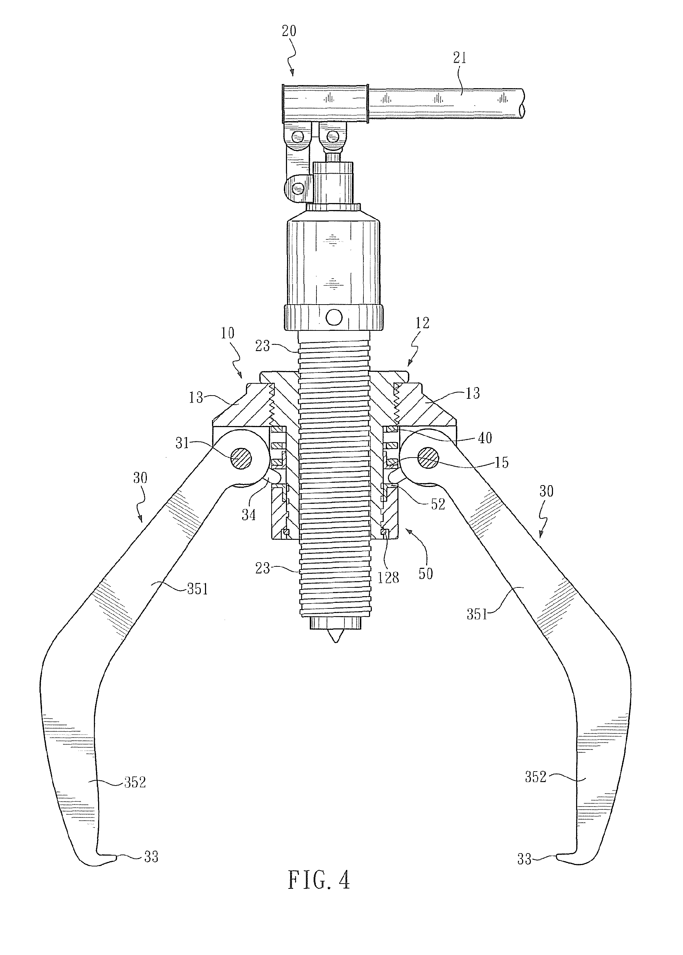

Referring to **Figure 4****,** a sectional view of the hydraulic puller shows the jaws **30** spread apart to the most. Since the control unit **50** contacts the C-ring **128** with the bottom **541** of the second groove **54** at its lower end (referring to **FIG. 3****)**, the spring force of the spring **40** is applied to the pushing blocks **34** of the jaws **30** so as to spread the jaws **30** outward.

The spread jaws **30** then can hook a wheel-shaped member (not shown) with their hooked portions. The hydraulic power device **20** drives the pushing rod **22** to apply a heavy load against an axle on which the wheel-shaped member is mounted so that the jaws pull and remove the wheel-shaped member from the axle.

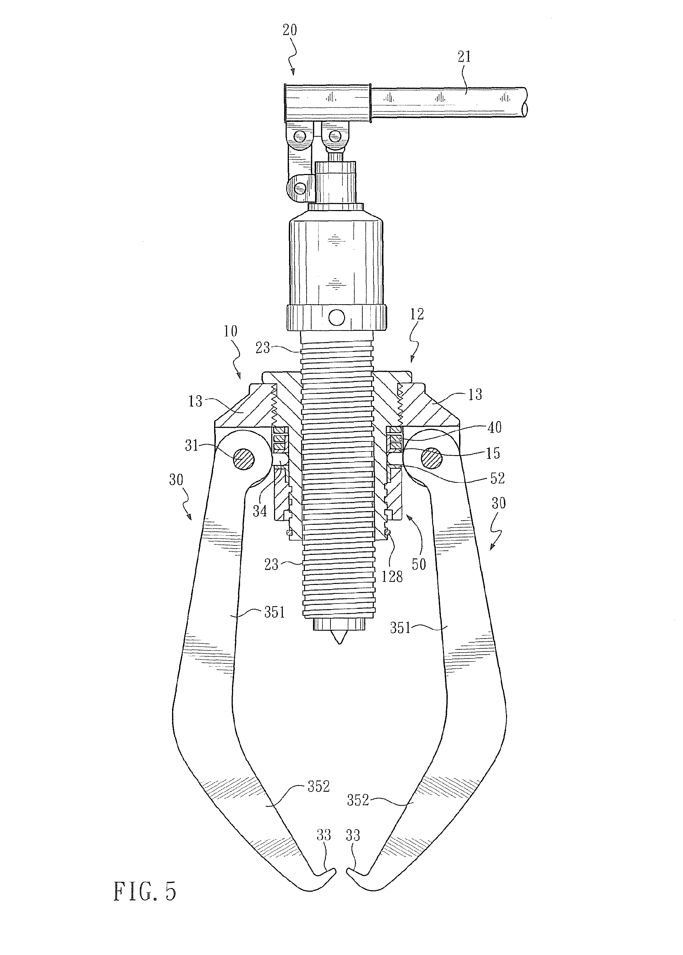

Referring to **Figure 5**, when the control unit **50** is rotated and thus moves along the second threaded segment **123** of the central sleeve **12** toward the spring **40,** the second surfaces **342** (clearly indicated in **FIG. 3****)** of the pushing blocks **34** of the jaws **30** are pressed so that the jaws **30** simultaneously sway inward, thus being retracted.

In the present embodiment, the hydraulic puller is equipped with three said jaws **30** and one said handle **60.** However, the hydraulic puller may be realized by two said jaws **30,** assembled to the handle joint **14** and the jaw joint **13** opposite to the handle joint **14,** respectively.

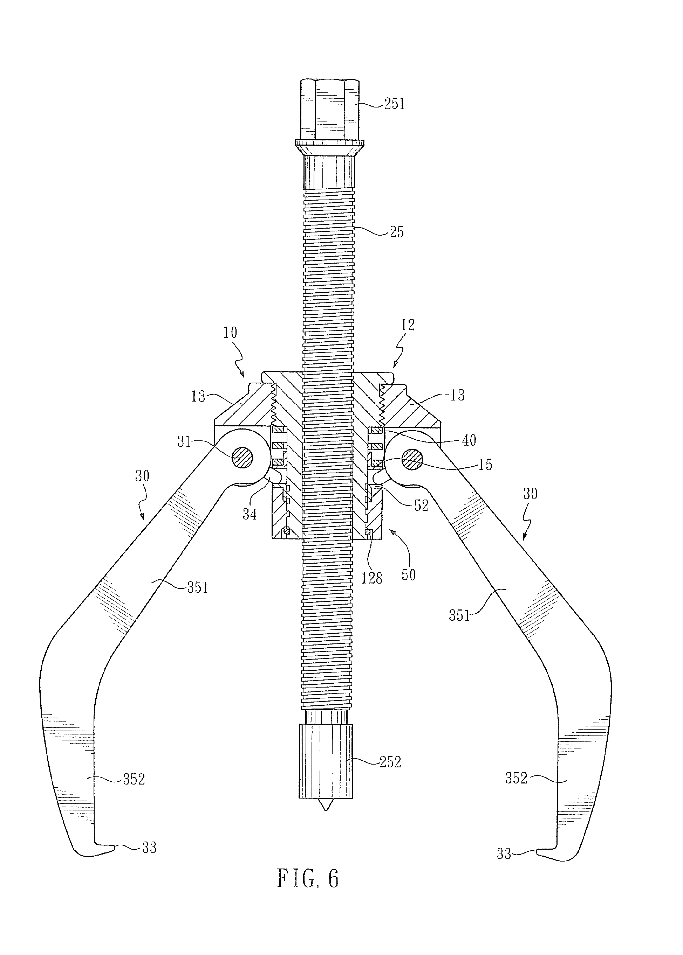

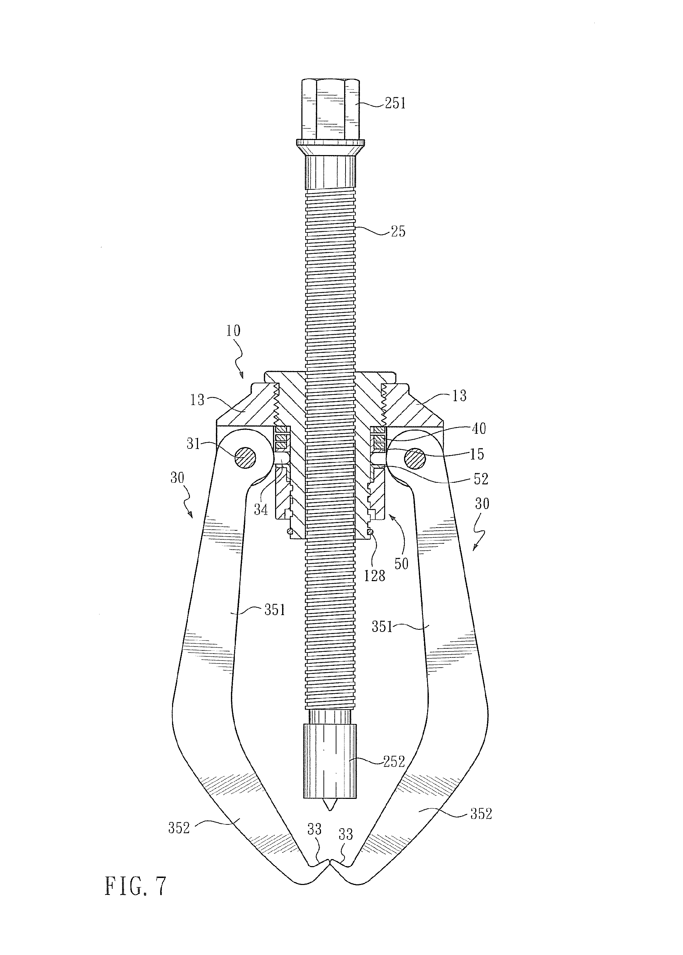

Please refer to **Figures 6** and **7** for a second embodiment of the present invention. Therein, a screw **25** is coupled with the treaded segment **124** of the central sleeve **12.** The screw **25** has a hexagonal combining portion **251** formed at its upper end and a columnar pushing portion **252** formed at its lower end. The combining portion **251** is for being coupled with and driven by an external tool (not shown) to make the screw **25** move upward and downward with respect to the central sleeve **12.** When moving downward, the pushing portion **252** applies a heavy load to an axle on which a wheel-shaped member is mounted so that the jaws remove the wheel-shaped member from the axle.

## Claims

1. A portable hydraulic puller, having a jaw base (10) and a plurality of jaws (30) each connected with the jaw base (10) by a pivot (31), the portable hydraulic puller being **characterized in that**:
a spring (40) is assembled to the jaw base (10) to apply a spreading spring
force to connecting ends (32) of the jaws (30); and
a control unit (50) is assembled to the jaw base (10) to apply a contracting
force to the connecting ends (32) of the jaws (30), wherein the contracting force is counter to the spring force of the spring (40).

2. The portable hydraulic puller of Claim 1, wherein the jaw base (10) includes a circular body (11) and a central sleeve (12) coaxially assembled in the circular body (11), in which a plurality of jaw joints (13) are provided at an outer periphery of the circular body (11).

3. The portable hydraulic puller of Claim 2, wherein a first treaded segment (121), a smooth segment (122), and a second treaded segment (123) are successively formed at an outer periphery of the central sleeve (12), the first treaded segment (121) being coupled with an inner threaded surface (111) of the circular body (11), the spring (40) being mounted around the smooth segment (122), the second treaded segment (123) being coupled with the control unit (50), which is a ring-shaped member with threads (51) formed on an inner periphery thereof, and a horizontally extended positioning portion (126) being formed at an end of the central sleeve (12) for contacting the jaw base (10).

4. The portable hydraulic puller of Claim 1, wherein each said jaw (30) has a said connecting end (32) at one end, a hooked portion (33) at an opposite end, and a shank (35) connected between the connecting end (32) and the hooked portion (33), in which the shank (35) includes a first segment (351) and a second segment (352) that are integrally formed with a predetermined angle therebetween, and the second segment (352) is greater than the first segment (351) in both thickness and width.

5. The portable hydraulic puller of Claim 4, wherein each said connecting end (32) has a protrudent pushing block (34) that is corresponding to the smooth segment (122) of the central sleeve (12) and comprises a first surface (341) and a second surface (342), the spring (40) applying the spring force to the first surfaces (341), the control unit (50) contacting the second surfaces (342), and a first gasket (15) settled between the spring (40) and the first surfaces (341) of the pushing block (34) on the jaws (30).

6. The portable hydraulic puller of Claim 2, wherein a handle joint (14) is provided at the outer periphery of the circular body (11) for connecting a handle (60), a pivot (141) having a threaded hole (143) diametrically passing therethrough and a through hole (62) passing through a proximal end of the handle (60) that is aligned with the threaded hole (143) so that a screw (63) is allowed to pierce through the through hole (62) and get coupled with the threaded hole (143) of the pivot (141).

7. The portable hydraulic puller of Claim 6, wherein a lighting device (65) is assembled to the handle (60) so that a bulb (66) of the lighting device (65) is exposed at a distal end of the handle (60) while a switch (67) of the lighting device (65) is provided on the handle (60) for easy switching.

8. The portable hydraulic puller of Claim 1, further comprising a hydraulic power device (20) set at a center of the jaw base (10) for controlling a pushing rod (22) connected with the hydraulic power device (20) to move.

9. The portable hydraulic puller of Claim 1, further comprising a screw (25) coupled with the jaw base (10), wherein the screw (25) has a hexagonal combining portion (251) formed at an upper end thereof and a columnar pushing portion (252) formed at a lower end thereof.

10. The portable hydraulic puller of Claim 3, wherein a groove (127) is formed at one end of the central sleeve (12) for receiving a C-ring (128), so that when the control unit (50) moves away from the spring (40) to a limit, a second groove (54) at a lower end of the control unit (50) receives the C-ring (128) with a bottom (541) of the second groove (54) abutting against the C-ring (128).
